# EUROPEAN PATENT APPLICATION

(11) **EP 2 886 968 A1**
(43) Date of publication of application: **24.06.2015**
(21) Application number: 14198505.1
(22) Date of filing: 17.12.2014
(51) Int. Cl.: F24F 5/00, F24F 7/013

(54) **DEVICE FOR CONDITIONING AND VENTILATING A CLOSED ROOM**

(30) Priority: 18.12.2013 IT UD20130170
(71) Applicant: Olivieri, Adriano, 34151 Trieste (IT)
(72) Inventor: Olivieri, Adriano, 34151 Trieste (IT)
(74) Representative: Petraz, Gilberto Luigi

(57) **Abstract**

A device for conditioning and ventilating a closed room (11) comprises at least a ventilation unit (13) configured to at least introduce a stream of entering air (A_{IMM}) into the closed room (11) and at least a thermal accumulation member (16) configured to accumulate heat or cold and having one or more internal cavities (17) for the passage of said stream of entering air (A_{IMM}). The device also comprises a compact conditioning unit (14), comprising the thermal accumulation member (16) and heat exchange means (18) passing through the thermal accumulation member (16) and configured to supply or remove heat to/from it, so as to heat or cool the stream of entering air (A_{IMM}) passing through said one or more internal cavities (17).

## Description

### FIELD OF THE INVENTION

Forms of embodiment described here concern a device for conditioning and ventilating a closed room, such as an area or a room of a building for domestic or industrial use.

In particular, forms of embodiment described here can be applied in the field of sustainable building in buildings with high energy efficiency to guarantee the change of the air inside the respective rooms and the thermal conditioning of the air entering into each of the rooms. Moreover, forms of embodiment described here can also be applied to mobile units, for example habitable mobile units such as campers or caravans.

### BACKGROUND OF THE INVENTION

It is known that in the damp areas of rooms of a building, for example a room in a home, or a closed area of a construction for industrial use, conditions favorable for the growth of molds and funguses can arise, due, for example, to the formation of condensation on the walls of such places.

It is also known that unhealthy conditions can arise inside a building due to the concentration of particles, sometimes noxious, emitted by paints, coatings, resins, adhesives or other, present in the rooms, for example on the walls, on furniture or on other objects.

It is well-known that a correct and plentiful ventilation of the rooms, which guarantees a sufficient change of air, allows to obtain a reduction in internal humidity and prevents the formation of funguses and molds, and also allows to expel potentially noxious particles to the outside, keeping the air inside healthy.

Techniques are known for ventilating rooms that provide a periodic opening of windows and/or doors, during the day, to carry out a complete change of the internal air.

Other known ventilation techniques provide to make hollows or spaces in the structures of the buildings, able to keep them constantly and sufficiently ventilated, using natural convection for example.

In the field of sustainable architecture, where the objective is to make buildings with a low environmental impact and high energy efficiency, in which energy consumption and the dispersion of energy are reduced to a minimum, it is normally provided that the respective structures are well insulated, as well as airtight and without hollows or spaces that could give rise to heat dispersion.

In such buildings, moreover, both ventilation obtained by opening doors and windows, and also ventilation obtained through natural convection can both be disadvantageous, in that they are not controlled and can be detrimental to energy efficiency and cause an increase in consumption needed for heating or cooling the rooms.

It is necessary, however, even for buildings with high energy efficiency, to have the internal air changed periodically, so as to prevent the formation of condensation and unhealthy funguses and mold, as well as to eliminate any potentially noxious particles.

To this purpose, it is known to use ventilation devices associated with the walls of the buildings and communicating with the outside of the buildings, which use forced ventilation, centralized or decentralized, to forcedly extract the internal air from the rooms and to introduce fresh air from the outside.

The forced ventilation must necessarily be maintained throughout the year, possibly making variations to the operating parameters depending on the specific thermo-hygrometric characteristics inside or outside the buildings.

Known techniques of decentralized ventilation provide to adopt a plurality of ventilation devices in a building, able to introduce air into the rooms, and a plurality of ventilation devices able to remove air from the rooms, functioning alternately.

Other known solutions can provide to use ventilation devices able to function in predefined alternate cycles of air extraction and introduction.

These predefined cycles are intended to maintain, inside the rooms, also in conformity with specific national and international regulations, a level of humidity unsuitable for the formation of funguses and molds.

For every room to be ventilated ventilation devices can be provided on opposite walls of the room. In this case, the devices can function in a reciprocally inverted manner, so as to perform cycles of air extraction and introduction on opposite sides of the room.

Forced ventilation devices are also known that are provided with heat recovery means, for example made with ceramic bodies having a honeycomb structure, configured to absorb heat from the hot air exiting from the room during the extraction step, to store it temporarily and then to release it, heating the air entering the room during the subsequent introduction step.

One disadvantage of known ventilation devices is that, apart from changing the air in a room, they are able to possibly obtain an increase in the temperature of the entering air which is in any case insufficient to heat the air above the temperature of the air already inside the room: this prevents these devices from replacing conventional heating apparatuses, with a consequent negative effect on the energy efficiency and environmental sustainability of the building.

Another disadvantage of known ventilation devices is that they are not able to cool the rooms, so that it is not possible to increase the comfort inside them during the hottest periods of the year, unless recourse is made to conventional cooling apparatuses, which in this case too has negative effects on the energy efficiency and environmental sustainability of the building.

Document DE-A-102007013779 describes a known device for cooling or heating air.

There is therefore a need to perfect a device for conditioning and ventilating a closed room that can overcome at least one of the disadvantages of the state of the art.

In particular, purpose of the present invention is to obtain a device for conditioning and ventilating a closed room that is able to allow both to change the air inside the closed room, and also to condition the air inside the closed room, selectively providing to heat and cool it depending on specific requirements.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

Forms of embodiment described here concern a device to condition and ventilate a closed room. According to one form of embodiment, the device comprises at least a ventilation unit configured to at least introduce at least a stream of entering air into the closed room and at least a thermal accumulation member configured to accumulate heat or cold and having one or more internal cavities for the passage of the stream of entering air.

According to one aspect of the present description, the device also comprises a compact conditioning unit, comprising the at least one thermal accumulation member and heat exchange means associated with the at least one thermal accumulation member and configured to supply or remove heat to/from the thermal accumulation member, so as to heat or cool the stream of entering air passing through the one or more internal cavities.

In this way, as well as ventilating the closed room, the advantage is obtained of being able to air-condition the closed room by conditioning the stream of air entering therein. This air-conditioning can therefore occur without using conventional heating or air-conditioning plants, respectively with a boiler or compression, but with the at least partial integration of the heat exchange means in the thermal accumulation member through which the stream of air entering into the closed room passes.

Moreover, since the stream of entering air is conditioned, which stream for example passes through delimitation walls of the closed room, it is possible to contain the overall size of the conditioning and ventilation device, thanks also to the possibility of maintaining the conditioning unit compact.

According to forms of embodiment described here, the at least one thermal accumulation member is made of a ceramic material or a composite material with a ceramic base or a metal material having a conformation defining the one or more internal cavities and chosen from a porous structure, a honeycomb structure, a structure defined by reciprocally distanced segments, a structure with channels or passages.

These solutions advantageously allow to increase the accumulation capacity and thermal yield of the thermal accumulation member, as well as allowing to make the spaces in which to insert the heat exchange means.

According to aspects described here, the heat exchange means comprise at least a conditioning circuit containing a heat-carrying fluid and provided with a plurality of capillary tubes positioned passing internally through said thermal accumulation member and connected to a delivery branch and a return branch.

In some forms of embodiment, the heat exchange means comprise at least a heat exchange circuit having at least one portion put in contact or proximity with the at least one conditioning circuit.

In some forms of embodiment, the heat exchange means comprise a heat exchanger. In particular, the delivery branch is configured to transfer the heat-carrying fluid from the heat exchanger to the capillary tubes and the return branch is configured to transfer the heat-carrying fluid from the capillary tubes to the heat exchanger. Moreover the heat exchanger comprises the heat exchange circuit.

According to some forms of embodiment, the heat exchange means comprise heating means and cooling means able to be selectively activated to give up heat to or take heat from the thermal accumulation member.

In some forms of embodiment, the cooling means comprise at least a first chemical mixture contained in the heat exchange circuit, to carry out endothermic chemical reactions able to take heat from the heat-carrying fluid circulating in the conditioning circuit.

According to some forms of embodiment, the heating means comprise at least a second chemical mixture to carry out exothermic chemical reactions in the portion of the heat exchange circuit, able to supply heat to the heat-carrying fluid circulating in the conditioning circuit.

In this way, advantageously, the possibility of being able to determine the desired temperature of the heat-carrying fluid is obtained, and thus of the thermal accumulation member, by using cooling or heating mixtures, and only due to the effect of chemical reactions, therefore without needing to use bulky heating and cooling plants, which are costly, energy consuming and not very efficient, such as those used in common practice for air conditioning closed rooms.

In some forms of embodiment, the heat exchange means comprise a solid-state heat pump associated, directly or indirectly, with the at least one heat accumulation member.

In some forms of embodiment a solid-state heat pump is provided, interposed between two heat accumulation members, each associated with a respective ventilation unit.

In some forms of embodiment, two conditioning circuits are provided, each associated with a respective heat accumulation member and provided with heat exchange coils cooperating respectively with a hot face or side of the solid-state heat pump and with a cold face or side of the solid-state heat pump.

In some forms of embodiment, a solid-state heat pump associated with a single thermal accumulation member is provided, and two conditioning circuits are provided associated with the same thermal accumulation member and also associated, respectively with one hot face or side of the solid-state heat pump and with one cold face or side of the solid-state heat pump.

In some forms of embodiment, a solid-state heat pump associated with two thermal accumulation members is provided, and wherein two conditioning circuits are provided, each associated with a respective thermal accumulation member and associated respectively with one hot face or side of the solid-state heat pump and with one cold face or side of the solid-state heat pump.

In some forms of embodiment, a solid-state heat pump associated with a single thermal accumulation member is provided, and one conditioning circuit associated with the thermal accumulation member and two heat exchange circuits are provided, associated respectively with one hot face or side of the solid-state heat pump and with one cold face or side of the solid-state heat pump.

In some forms of embodiment, the conditioning circuit is provided with a heat exchange coil and the two heat exchange circuits are provided with respective heat exchange coils coupled with the heat exchange coil.

In some forms of embodiment, the thermal accumulation member comprises a containing structure filled with a plurality of filling elements disposed randomly, to define a packed structure with a plurality of passage channels, or passages, which define the internal cavities.

Other forms of embodiment described here also concern an apparatus in a kit for conditioning and ventilating one or more closed rooms, comprising a plurality of conditioning and ventilation devices according to the present description.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of forms of embodiment, given as a non-restrictive example with reference to the attached drawings wherein:
- fig. 1 is a schematic lateral section of a conditioning and ventilation device according to forms of embodiment described here;
- figs. 2a and 2b are cross sections of different forms of embodiment of a component of the device in fig. 1;
- fig. 3 is a schematic representation of a building provided with a plurality of conditioning and ventilation devices according to forms of embodiment described here,
- figs. 4-8 are schematic representations of a conditioning and ventilation device according to various forms of embodiment described here.

In the following description, the same reference numbers indicate identical parts of the device for conditioning and ventilating a closed room according to the present invention, also in different forms of embodiment. It is understood that elements and characteristics of one form of embodiment can be conveniently incorporated into other forms of embodiment without further clarifications.

### DETAILED DESCRIPTION OF FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof For example, the characteristics shown or described insomuch as they are part of one form of embodiment can be adopted on, or in association with, other forms of embodiment to produce another form of embodiment. It is understood that the present invention shall include all such modifications and variants.

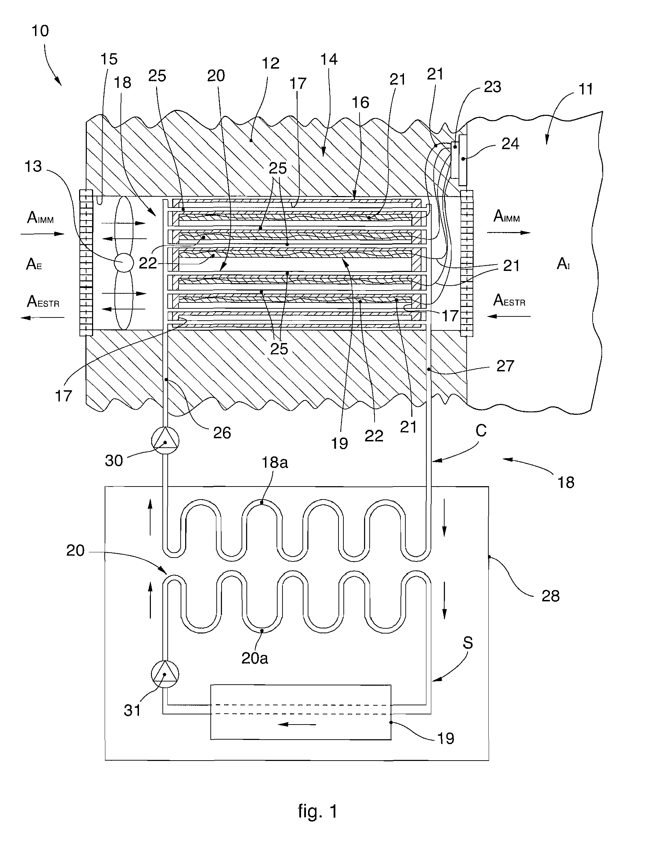

Forms of embodiment described here using fig. 1, and which can be combined with all the forms of embodiment described here, concern a device 10 usable for conditioning and ventilating a closed room 11, of a building for example. The building can be for domestic, commercial or industrial use, either public or private. There is nothing to exclude that forms of embodiment described here can also be used in a mobile unit, such as a camper or caravan, for conditioning and ventilating a closed room 11 of a mobile unit.

The device 10 can have the function of carrying out the cyclic change of air and the thermal-hygrometric conditioning of internal air A_{I} of the closed room 11.

The closed room 11 can be a room, premises or a closed area of a house or any commercial or industrial property.

For example, the building may be a house built according to criteria of sustainable building and maximum energy efficiency, and therefore provided with a minimally dispersive structure, without interstices or discontinuities able to ventilate the structure naturally.

The closed room 11 can be delimited by walls 12, which can include both internal dividing walls and periphery walls of the building.

In some forms of embodiment, a single device 10 can be associated with a closed room 11, or it can also be provided that the closed room 11 is served by a plurality of devices 10.

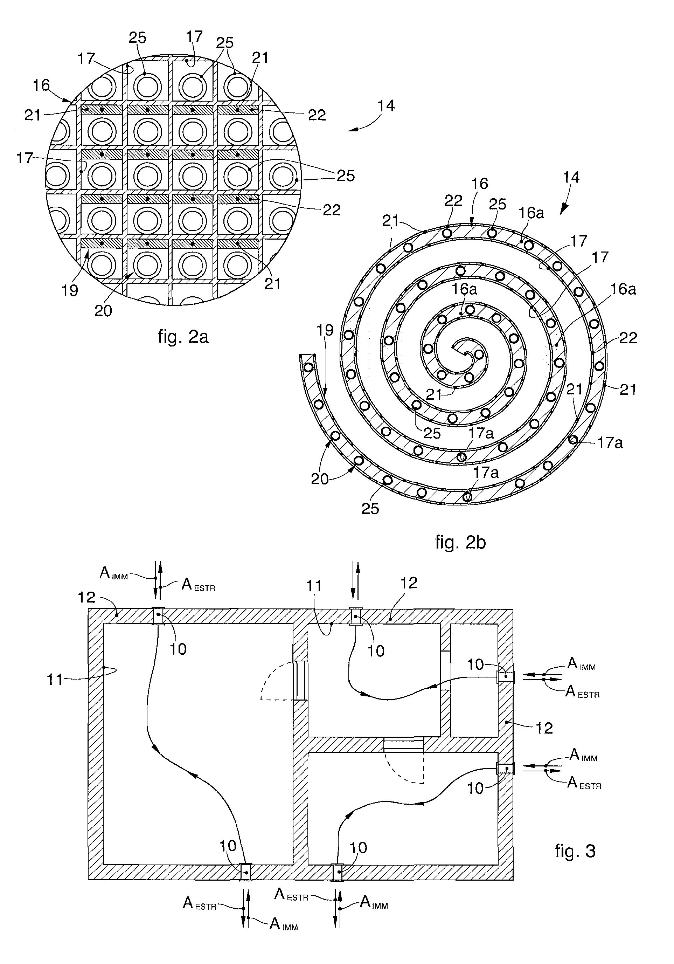

Fig. 3 is used to describe possible combined applicative solutions, in which both closed rooms 11 each served by a pair of devices 10, and also closed rooms 11 defined by communicating zones each served by a device 10.

Hereafter in the description reference will be made to a single device 10, merely by way of example and for convenience and clarity of description, without intending to limit the present invention to said specific embodiment.

In accordance with forms of embodiment described using fig. 1, and which can be combined with all the forms of embodiment described here, the device 10 can include at least a ventilation unit 13, for example an axial ventilator or a centrifugal ventilator, or another mean suitable to move air, configured to perform a forced ventilation of the closed room 11 by introducing thereto and/or extracting air therefrom.

This forced ventilation can be adjustable as a function of the type of closed room 11, or of the specific needs of the occupants, or again of the thermal-hygrometric conditions outside the closed room 11 itself.

For example, the ventilation unit 13 can be adjusted in speed in order to control the influx or reflux of the air and to guarantee a minimum recycling thereof.

In possible solutions, the ventilation unit 13 can be configured to carry out a complete change of air inside the closed room 11 even several times a day, for example six, twelve even up to twenty-four or more times a day.

A continuous functioning of the device 10 can be provided during the day, even during the whole year, in order to maintain the closed room 11 constantly ventilated, particularly in the case of buildings with high energy efficiency as above.

With reference to fig. 3, an alternate functioning can be provided to introduce and extract the air by the devices 10 present in each closed room 11, so as to be able to effect the conditioning and ventilation with greater efficiency for which the devices 10 are designed.

Means to control the temperature and/or humidity of the internal air A_{I} can be provided, so as to manage and control the cycles of air exchange. Possible timers can also be provided, configured to periodically activate and deactivate the ventilation unit 13 according to specific means.

The device 10 can also include a conditioning unit 14, configured to thermo-hygrometrically condition the air entering into the closed room 11 and obtain a level of conditioning in the closed room 11 such as to guarantee the salubrity of the internal air A_{I} and comfort for the people present therein.

Moreover, the device 10 can be at least partly inserted in a housing seating or channel 15, made through in one of the walls 12 delimiting the closed room 11, which according to an advantageous example is a bearing wall of the building.

The ventilation unit 13, in particular of the axial type, can be inserted into the housing seating 15 and configured at least to introduce external air A_{E} into the closed room 11, determining a stream of air A_{IMM} entering into the closed room 11 itself.

In some forms of embodiment, which can be combined with all the forms of embodiment described here, the ventilation unit 13 can be the reversible type, that is, able to both introduce external air A_{E} into the closed room 11 and to take out internal air A_{I} from the closed room 11 and expel it to the outside of the closed room 11, generating a corresponding stream of exiting air A_{ESTR}.

The conditioning unit 14 can include a thermal accumulation member 16, which can be entirely contained in the housing seating 15.

In possible solutions, described for example with reference to fig. 1, the thermal accumulation member 16 can be located downstream of the ventilation unit 13 with respect to the stream of entering air A_{IMM} and upstream of the same ventilation unit 13 with respect to the exiting air A_{ESTR}.

Other solutions can provide an inverse disposition of the thermal accumulation member 16 and the ventilation unit 13 with respect to the one above.

The thermal accumulation member 16 can be made of a ceramic or composite material, that is, a composite material with a ceramic base, or a metal material, for example a material which cannot be attacked by molds, funguses or bacteria. The thermal accumulation member 16 can have one or more through internal cavities 17, through which the air entering into and the air exiting from the closed room 11 can flow.

In some forms of embodiment, which can be combined with all the forms of embodiment described here, the thermal accumulation member 16 can have a conformation defining the one or more internal cavities 17 and chosen from a porous structure, a honeycomb structure, a structure defined by segments 16a reciprocally distanced, or a structure with channels or passages.

Moreover, the ceramic or composite material can be a material with a high thermal capacity, able to accumulate and maintain thermal energy, in order to act as an enthalpic store, or buffer, in which it is possible to accumulate heat or cold.

To this purpose, the thermal accumulation member 16 can, for example, have a thermal conductivity less than 5 W/mK.

Figs. 2a and 2b can be used to describe forms of embodiment of the thermal accumulation member 16 in which it can include a ceramic body with a porous or honeycomb structure (fig. 2a), or it can be defined by a plurality of segments 16a distanced from each other to determine the one or more internal cavities 17, for example defining an overall spiral conformation of the thermal accumulation member 16 (fig. 2b), or with concentric cylinders.

In particular, the thermal accumulation member 16 is configured to maintain a predetermined enthalpic state, to act selectively both as a source of energy and as a well of thermal energy.

In some forms of embodiment, which can be combined with all the forms of embodiment described here, the thermal accumulation member 16 may be able to take heat from the stream of exiting air A_{ESTR} and accumulate it, to then give it up to the stream of entering air A_{IMM}, minimizing the thermal losses of the internal air A₁ at the end of an extraction and introduction cycle.

In this way, the thermal accumulation member 16 is able to preserve up to even 90% of the heat energy of the internal air A₁ during a cycle comprising a successive extraction and introduction.

In some forms of embodiment, which can be combined with all the forms of embodiment described here, the thermal accumulation member 16 can be configured to take heat from the stream of entering air A_{IMM}, determining a consequent lowering of the temperature of the internal air A_{I} in the closed room 11.

In some forms of embodiment, which can be combined with all the forms of embodiment described here, the conditioning unit 14 can include heat exchange means 18, associated with the thermal accumulation member 16 and configured to exchange heat with the latter in order to confer a desired enthalpic state, selectively with a high or low energy content.

In some forms of embodiment, which can be combined with all the forms of embodiment described here, a feed and control unit 24 can be provided to manage, control and feed the device 10. In some forms of embodiment, which can be combined with all the forms of embodiment described here, the feed and control unit 24 can include a control board or system controller. The system controller can include a central processing unit or CPU. The CPU can be any type of computer processor. A memory can be connected to the CPU and can be one or more of those commercially available, such as a Random Access Memory (RAM), a Read Only Memory (ROM), floppy disc, hard disc, mass memory, or any other form of digital, remote or local storage. Software instructions and data can be encoded for example and memorized in the memory in order to command the CPU. Auxiliary circuits can also be provided connected to the CPU to help the processor conventionally. The auxiliary circuits can include for example at least one of either: cache circuits, feed circuits, clock circuits, I/O circuitry, subsystems and similar. In possible implementations, the system controller can include a wireless communication module, for radio, infrared communication for example or suchlike. A remote control can also be provided, to command the feed and control unit 24 remotely and which can, for example, communicate with the wireless communication module of the system controller.

In some forms of embodiment, which can be combined with all the forms of embodiment described here, the heat exchange means 18 can include heating means 19, configured to supply heat to the thermal accumulation member 16 and/or cooling means 20, configured to take energy from it. The heat exchange means 18 can include both heating means 19 and cooling means 20, configured to take energy from it.

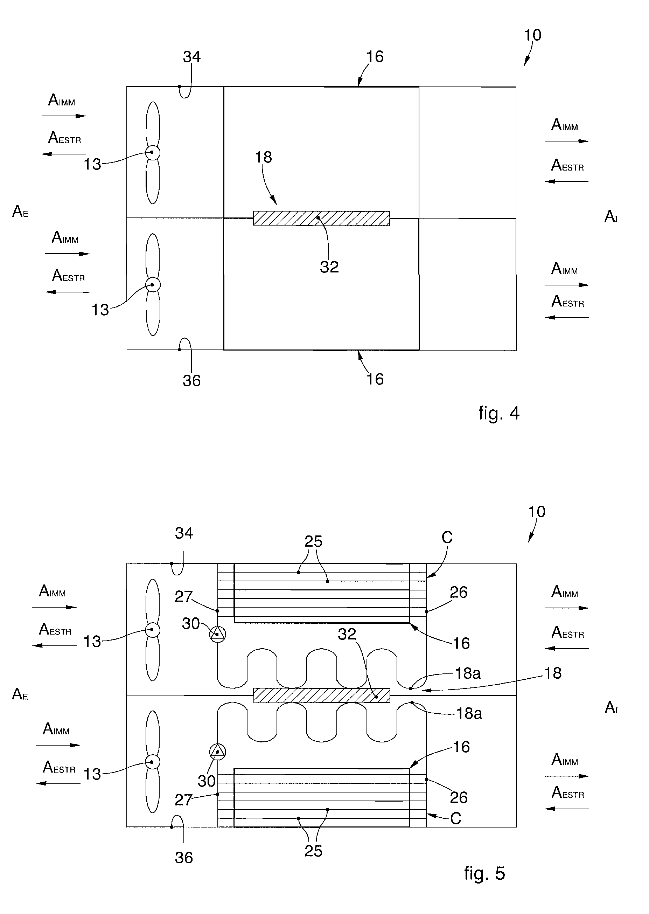

In some forms of embodiment, which can be combined with all the forms of embodiment described here, the heating means 19 and the cooling means 20 can be formed by a single heating and cooling mean, for example a solid-state heat pump 32 (see figs. 4-7 for example).

In some forms of embodiment, which can be combined with all the forms of embodiment described here, the heat exchange means 18 can include a heat exchange coil 18a. The cooling means 20 can include a heat exchange coil 20a. The heat exchange coil 18a can cooperate with the heat exchange coil 20a.

In some forms of embodiment, which can be combined with all the forms of embodiment described here, the heating means 19 can be distributed uniformly inside the accumulation body 16, for example inside the corresponding internal cavities 17.

In other forms of embodiment, which can be combined with all the forms of embodiment described here, the heating means 19 can be contained in seatings made for the purpose in the thermal accumulation member 16 and distinct from the internal cavities 17.

In possible implementations, described by way of example with reference to figs. 1 and 2b, the heating means 19 can include, for example, a series of electric heating resistances 21 inserted in or resting on a conductive covering 22 that can be integrated, for example by gluing, with the thermal accumulation member 16.

In possible variant solutions, the electric heating resistances 21 can have a grill, coil or plate configuration or a combination of the three.

In some forms of embodiment, which can be combined with all the forms of embodiment described here, the electric heating resistances 21 can be connected to a connector 23, which allows connection to a source of electric energy feed.

In some forms of embodiment, the feed and control unit 24 can be configured to supply electric energy to the connector 23 in a controlled way and as a function, for example, of the temperature of the external air A_{E} and the presence of an extraction cycle in progress. In some forms of embodiment, which can be combined with all the forms of embodiment described here, the electric heating resistances 21 have the function of converting into thermal energy the electric energy supplied to them by the feed and control unit 24, due to the Joule effect for example. This is to supply heat, and thus heat the thermal accumulation member 16, conferring on it a desired enthalpic state with a high energy content in which it is provided with a uniform temperature and higher than both the temperature of the external air A_{E} and the temperature of the internal air A_{I}.

In some forms of embodiment, which can be combined with all the forms of embodiment described here, the feed and control unit 24 can be configured to control the energy absorption of the electric heating resistances 21 to supply electric energy to them in a controlled and measured way as a function of the temperature of the thermal accumulation member 16 to be obtained.

Means to control the temperature of the thermal accumulation member 16 can also be provided.

Once the desired temperature has been reached for the thermal accumulation member 16, corresponding to a desired energy content of the latter, the thermal accumulation member 16 is able to give up energy to the stream of entering air A_{IMM} in the closed room 11 during an air introduction cycle.

The heating of the stream of entering air A_{IMM} that is obtained in this way is such as to allow the winter conditioning of the internal air A_{I}, substituting conventional heating systems, for example a boiler or energy consuming heat pumps.

In some forms of embodiment, which can be combined with all the forms of embodiment described here, the heat exchange means 18 can include a conditioning circuit C provided with a plurality of capillary tubes 25 in which a heat-carrying fluid, for example water, can flow.

In possible solutions, described for example with reference to figs. 1 and 2a, the capillary tubes 25 can each be inserted in a corresponding internal cavity 17 of the thermal accumulation member 16.

In other solutions, described for example with reference to fig. 2b, the capillary tubes 25 can each be inserted in a corresponding through seating 17a made in the thermal accumulation member 16.

In some forms of embodiment, which can be combined with all the forms of embodiment described here, as well as the capillary tubes 25, the conditioning circuit C can also include a delivery branch 26 and a return branch 27. The heat exchange coil 18a can be provided between the delivery branch 26 and the return branch 27.

In other forms of embodiment, the capillary tubes 25, the delivery branch 26 and the return branch 27 can define segments of a single pipe, which, for example, can be conformed as a coil.

In possible implementations, the device 10 can include a heat exchanger 28, cooperating with the conditioning circuit C to exchange heat with the heat-carrying fluid contained therein.

In possible solutions, it can be provided that the heat exchanger 28 is disposed remote from the housing seating 15 in which the ventilation unit 13 and the thermal accumulation member 16 are positioned.

In some forms of embodiment, which can be combined with all the forms of embodiment described here, the delivery branch 26 is configured to transfer the heat-carrying fluid from the heat exchanger 28 to the capillary tubes 25, while the return branch 27 is configured to transfer the heat-carrying fluid from the capillaries 25 to the heat exchanger 28.

Each of the branches, delivery 26 and return 27, can also perform the function of collector, since the capillaries 25 all start off from one of the two branches 26, 27, and all end in the other of the two branches 27, 26.

In some forms of embodiment, which can be combined with all the forms of embodiment described here, the heat exchanger 28 can include a heat exchange circuit S in which a first chemical mixture can be present able to trigger endothermic and reversible chemical or physical reactions able to remove heat from the heat-carrying fluid contained in the conditioning circuit C. In this case, the first chemical mixture acts as a cooling mean 20.

In other forms of embodiment, which can be combined with all the forms of embodiment described here, in the heat exchange circuit S a second chemical mixture can be present able to trigger exothermic and reversible chemical or physical reactions able to give up heat to the heat-carrying fluid contained in the conditioning circuit C. In this case, the second chemical mixture acts as a heating mean 19.

The above mentioned chemical and physical reactions can occur in a portion of the heat exchange circuit S in contact with or close to the cooling circuit C, in this way allowing to remove or give up energy from or to the heat-carrying fluid contained therein.

In possible implementations, the heat exchanger 28 can include, associated with the heat exchange circuit S, a regeneration unit 29, configured to regenerate the first and/or the second mixture present in the heat exchange circuit S, performing inverse reactions with respect to the reversible endothermic or exothermic reactions.

Example forms of embodiment, described for example with reference to fig. 1 and which can be combined with all the forms of embodiment described here, can provide that the conditioning circuit C also includes a pump 30, an electro pump for example, with the function of making the heat-carrying fluid circulate inside the capillary tubes 25 and the delivery 26 and return 27 branches.

Other forms of embodiment, which can be combined with all the forms of embodiment described here, can provide that the heat exchange circuit S includes a pump 31, for example an electro pump, to recirculate the first or the second chemical mixture.

With reference to fig. 1, in example forms of embodiment, the conditioning circuit C can be included in the cooling means 20, when it is provided that in the heat exchanger 28 energy is taken from the heat-carrying fluid by means of endothermic reactions.

As a consequence, the conditioning circuit C can be configured to begin a cooling cycle of the thermal accumulation member 16 that provides to cool the heat-carrying fluid in the heat exchanger 28 and then to transfer it to the capillary tubes 25 by means of the delivery branch 26, and then, once heat has been taken from the thermal accumulation member 16, which, therefore, acts as a "cold accumulator", to convey the heat-carrying fluid again, thus heated, toward the heat exchanger 28 to be cooled.

The thermal accumulation member 16 is therefore able to take heat from the stream of entering air A_{IMM} during an air introduction cycle.

In this way, the conditioning of the air entering into the closed room 11 is obtained, with the consequent refreshing of the internal air A₁ and, therefore, the conditioning of the closed room 11, even during the hottest periods of the year.

If the heat-carrying fluid is heated in the heat exchanger 28, the conditioning circuit C can act as a heating mean 19, for example in substitution of or integration with the electric heating resistances 21.

Figs. 4-7 are used to describe forms of embodiment, which can be combined with all the forms of embodiment described here, in which the heat exchange means 18 include a solid-state heat pump 32 associated, directly or indirectly, with one or more thermal accumulation members 16.

In some forms of embodiment, the solid-state heat pump 32 can be a Peltier cell. A Peltier cell as usable in the forms of embodiment described here is a thermal-electric device consisting of serial Peltier effect joints. The Peltier effect is a thermal-electric phenomenon in which an electric current flowing between two different metals or semi-conductors located in contact (Peltier joint) produces a heat transfer. A Peltier cell is basically a solid-state heat pump with the appearance of a thin plate; one of the two surfaces absorbs the heat while the other emits it. The direction in which the heat is transferred depends on the direction of the continuous current applied to the heads of the plate itself. A Peltier cell can be formed by two doped N-type or P-type semi-conductor materials, connected to each other by a thin copper layer. If a positive voltage is applied to the N-type and a negative voltage is applied to the P- type, the upper layer cools while the lower one heats up. Inverting the voltage the movement of thermal energy is inverted.

In possible implementations, the solid-state heat pump 32 can be powered electrically and controlled by means of the feed and control unit 24.

In particular, in forms of embodiment described using fig 4, which can be combined with all the forms of embodiment described here, the device 10 can include a solid-state heat pump 32 interposed between two thermal accumulation members 16. Typically, the solid-state heat pump 32 can have one hot side or face, and one cold side or face. The solid-state heat pump 32 can be in direct contact, on one side and the other, with the respective two thermal accumulation members 16, or a thermal conductive material, for example an insert, a layer, a plate can be provided between the faces of the solid-state heat pump 32 and the two thermal accumulation members 16. For example, thermo-conductive adhesives or graphite sheets about some tens of millimeters thick can be provided, or again a plate made of conductive metal, such as copper or aluminum. In these forms of embodiment, two housing seatings or channels 34, 36 can be provided, separate from each other, similar to the housing seating 15, respectively associated with the two thermal accumulation members 16. The housing seatings 34, 36 develop between the closed room 11 and the outside, to exchange internal air A₁ of the closed room 11 and external air A_{E}. Each of the two housing seatings 34, 36 can include a respective ventilation unit 13, disposed for example on the side opposite the closed room 11 with respect to the two thermal accumulation members 16. The two ventilation units 13 can be provided to move the air passing through the two thermal accumulation members 16, hot in the case of the thermal accumulation member 16 associated with the hot side or face of the solid-state heat pump 32 and cold in the case of the thermal accumulation member 16 associated with the cold side or face of the solid-state heat pump 32.

In forms of embodiment described using fig 5, which can be combined with all the forms of embodiment described here, the device 10 can include a solid-state heat pump 32 associated with two thermal accumulation members 16, in particular interposed between them. Two conditioning circuits C can be provided, in a similar way to that described using fig. 1, associated with a respective thermal accumulation member 16, in particular providing the respective capillary tubes 25 inserted in the internal cavities 17 of the two thermal accumulation members 16. The two conditioning circuits C can each include a delivery branch 26 and a return branch 27. The two conditioning circuits C are respectively associated with the hot face or side of the solid-state heat pump 32, and to the cold face or side of the solid-state heat pump 32. In particular, the two conditioning circuits C are provided with heat exchange coils 18a cooperating with the solid-state heat pump 32. The heat exchange coils 18a develop between the respective delivery 26 and return 27 branches. More particularly, the heat exchange coils 18a can face toward the solid-state heat pump 32, in particular adjacent to the respective hot and cold faces or sides of the solid-state heat pump 32. The heat exchange coils 18a can be in direct contact with the solid-state heat pump 32, or an intermediate material can be provided between the heat exchange coils 18a and the solid-state heat pump 32, for example an insert, a foil, a plate, thermally conductive as described with reference to fig. 4. The two conditioning circuits C can be provided with respective pumps 30, to determine the circulation of the heat-carrying fluid, hot or cold depending on the needs and the face or side of the solid-state heat pump 32 with which they are associated. According to use, for heating or cooling, one of the conditioning circuits C is activated at a time. This alternation can be managed by selectively activating the pumps 30, for example by means of the feed and control unit 24. In these forms of embodiment described using fig. 5, the two ventilation units 13 associated with the respective thermal accumulation members 16 and the two housing seatings 34, 36 can be provided, similarly to what was described with reference to fig. 4.

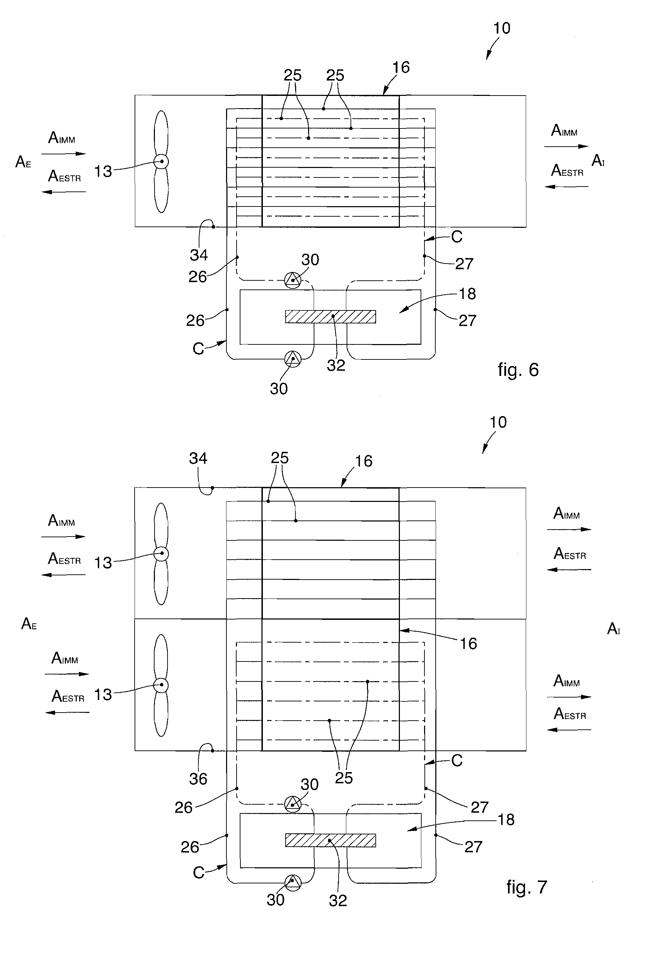

In forms of embodiment described using fig 6, which can be combined with all the forms of embodiment described here, the device 10 can include a solid-state heat pump 32 associated with a single thermal accumulation member 16. Two conditioning circuits C can be provided, in a similar way to that described using fig. 1, associated with a same thermal accumulation member 16, in particular providing the respective capillary tubes 25 inserted in the internal cavities 17 of the same thermal accumulation member 16. The capillary tubes 25 of the two different conditioning circuits C can be inserted into the same internal cavities 17 which are thus shared, or into different internal cavities 17. The two conditioning circuits C can each include a delivery branch 26 and a return branch 27. The two conditioning circuits C are respectively associated with the hot face or side of the solid-state heat pump 32 and to the cold face or side of the solid-state heat pump 32. The two conditioning circuits C can be provided with respective pumps 30 to determine the circulation of the heat-carrying fluid, hot or cold depending on the needs and the face or side of the solid-state heat pump 32 with which they are associated. Depending on use, for heating or cooling, one of the conditioning circuits C is activated at a time. This alternation can be managed by selectively activating the pumps 30, for example by means of the feed and control unit 24. In these forms of embodiment described using fig. 6, a single ventilation unit 13 is provided, associated with the single thermal accumulation member 16, and a single housing seating 34.

In forms of embodiment described using fig 7, which can be combined with all the forms of embodiment described here, the device 10 can include a solid-state heat pump 32 associated with two thermal accumulation members 16. Two conditioning circuits C can be provided, in a similar way to that described using figs. 1 and 6, each associated with a respective thermal accumulation member 16, in particular providing the respective capillary tubes 25 inserted into the internal cavities 17 of the respective thermal accumulation members 16. The two conditioning circuits C can each include a delivery branch 26 and a return branch 27. The two conditioning circuits C are respectively associated with the hot face or side of the solid-state heat pump 32, and to the cold face or side of the solid-state heat pump 32. The two conditioning circuits C can be provided with respective pumps 30 to determine the circulation of the heat-carrying fluid, hot or cold, according to needs. Depending on use, for heating or cooling, one of the two conditioning circuits C is activated at a time, heating or cooling the respective thermal accumulation member 16. This alternation can be managed by selectively activating the pumps 30, for example by means of the feed and control unit 24. In these forms of embodiment described using fig. 7, two single ventilation units 13 can be provided, associated with the respective thermal accumulation members 16, and the two housing seatings 34, 36, similar to what was described with reference to fig. 4.

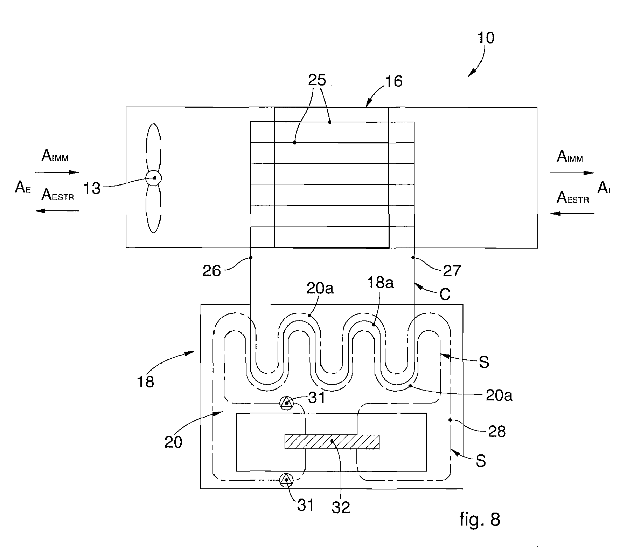

In forms of embodiment described using fig 8, which can be combined with all the forms of embodiment described here, the device 10 can include a solid-state heat pump 32 associated with one single thermal accumulation member 16. A conditioning circuit C and two heat exchange circuits S can be provided, similar to what was described using fig. 1.

In some forms of embodiment, which can be combined with all the forms of embodiment described here, the conditioning circuit C can include a delivery branch 26 and a return branch 27. There is only one conditioning circuit C, which is associated with the thermal accumulation member 16, in particular providing the capillary tubes 25 inserted in the internal cavity 17. The conditioning circuit C can be provided with a pump 30 for the circulation of the heat-carrying fluid.

The two heat exchange circuits S are respectively associated with the hot face or side of the solid-state heat pump 32 and with the cold face or side of the solid-state heat pump 32. In the two heat exchange circuits S a heat-carrying fluid for heat exchange is able to circulate. The two heat exchange circuits S can be provided with respective pumps 31, to determine the circulation of the heat-carrying fluid, hot or cold depending on the needs and the face or side of the solid-state heat pump 32 with which they are associated.

In some forms of embodiment, the conditioning circuit C can be provided with a heat exchange coil 18a. The heat exchange coil 18a is provided between the delivery branch 26 and the return branch 27. In some forms of embodiment, the two heat exchange circuits S can be provided with respective heat exchange coils 20a. In possible implementations, the two heat exchange coils 20a are coupled to the same heat exchange coil 18a, for example contiguous, adjacent or overlapping one another. Depending on use, for heating or cooling, one of the two thermal accumulation members 16 is activated at a time, heating or cooling the respective conditioning circuit C. This alternation can be managed by selectively activating the pumps 31, for example by means of the feed and control unit 24. In these forms of embodiment described using fig. 8, a single ventilation unit 13 is provided, associated with the single thermal accumulation member 16 and a single housing seating 34.

In forms of embodiment in which two conditioning circuits C are provided, as described using figs. 5, 6 and 7 for example, it can be provided that the two conditioning circuits C are separated, or they can be put in communication, since it can be advantageous, based on specific needs, to allow the passage of the heat-carrying fluid from one circuit to the other, for example from the hot part to the cold part, or vice versa.

In some forms of embodiment, which can be combined with all the forms of embodiment described here, the heat exchange between the conditioning circuit C and heat exchange circuits S can occur by means of heat exchange in which the heat-carrying fluid of the conditioning circuit C is air or water, while the heat-carrying fluid of the heat exchange circuits S can be glycol or a mixture of glycol and water. For example, an air-glycol heat exchange or a water-glycol heat exchange is possible. The heat exchange between conditioning circuit C and heat exchange circuits S is configured to advantageously have the maximum surface possible for heat exchange. Indeed, as the exchange surface between the two fluids increases, so do the heat exchange coefficients and this allows to have a device 10 with a better performance, or possibly less bulky and less costly with the same performance.

In some forms of embodiment, which can be combined with all the forms of embodiment described here, the thermal accumulation member 16 can include a containing structure filled with a plurality of filling elements, for example hollow cylindrical elements (Raschig rings) or saddle-shaped elements (Berl saddles) disposed randomly, for example with a packing technique, to define a packed structure with a plurality of passage channels or passages, which define the internal cavities 17. The filling elements can be, for example, ceramic or metal material.

In some forms of embodiment, which can be combined with all the forms of embodiment described here, the filling of the containing structure of the thermal accumulation member 16 can be performed orderly, that is, by structured packs, providing a system of undulated thin layers applied to support grills, which define the internal cavities 17.

In some forms of embodiment, which can be combined with all the forms of embodiment described here, the thermal accumulation member 16 can be configured as a radiator made of heat conductive metal, aluminum or copper for example, provided with channels or segments 16a, that define the internal cavities 17.

It is clear that modifications and/or additions of parts may be made to the device 10 for conditioning and ventilating a closed room as described heretofore, without departing from the field and scope of the present invention.

It is also clear that, although the present invention has been described with reference to some specific examples, a person of skill in the art shall certainly be able to achieve many other equivalent forms of device for conditioning or ventilating a closed room, having the characteristics as set forth in the claims and hence all coming within the field of protection defined thereby.

Although the above refers to forms of embodiment of the invention, other forms of embodiment can be provided without departing from the main field of protection, which is defined by the following claims.

## Claims

1. Device for conditioning and ventilating a closed room (11), comprising:
- at least a ventilation unit (13) configured to at least introduce at least a stream of entering air (A_{IMM}) into said closed room (11) and
- at least one thermal accumulation member (16) configured to accumulate heat or cold and having one or more internal cavities (17) for the passage of said stream of entering air (A_{IMM}),
**characterized in that** it comprises:
a compact conditioning unit (14), comprising said at least one thermal accumulation member (16) and heat exchange means (18) associated with said thermal accumulation member (16) and configured to supply or remove heat to/from said thermal accumulation member (16), so as to heat or cool the stream of entering air (A_{IMM}) passing through the one or more internal cavities (17) of said thermal accumulation member (16);
wherein said at least one thermal accumulation member (16) is made of a ceramic material or a composite material with a ceramic base or a metal material having a conformation defining said one or more internal cavities (17) and chosen from a porous structure, a honeycomb structure, a structure defined by reciprocally spaced segments (16a), a structure with channels or passages.

2. Device as in claim 1, **wherein** said heat exchange means (18) comprise at least one conditioning circuit (C) containing a heat-carrying fluid and provided with a plurality of capillary tubes (25) positioned passing internally through said thermal accumulation member (16) and connected to a delivery branch (26) and a return branch (27).

3. Device as in claim 2, **wherein** said heat exchange means (18) comprise at least one heat exchange circuit (S) having at least one portion put in contact or proximity with said at least one conditioning circuit (C).

4. Device as in claim 3, **wherein** said heat exchange means (18) comprise a heat exchanger (28), wherein said delivery branch (26) is configured to transfer said heat-carrying fluid from said heat exchanger (28) to the capillary tubes (25) and said return branch (27) is configured to transfer said heat-carrying fluid from the capillary tubes (25) to said heat exchanger (28), said heat exchanger (28) comprising said at least one heat exchange circuit (S).

5. Device as in any of the claims from 1 to 4, **wherein** said heat exchange means (18) comprise heating means (19) and cooling means (20) able to be selectively activated to give up heat to or take heat from said thermal accumulation member (16).

6. Device as in claim 4 and 5, **wherein** said cooling means (20) comprise at least a first chemical mixture contained in the heat exchange circuit (S), to carry out endothermic chemical reactions able to take heat from said heat-carrying fluid circulating in said conditioning circuit (C).

7. Device as in claim 6, **wherein** said heat exchanger (28) comprises a regeneration unit (29) configured for the regeneration at least of said first chemical mixture.

8. Device as in claim 6 or 7, **wherein** said heating means (19) comprise at least a second chemical mixture to carry out exothermic chemical reactions in said portion of said heat exchange circuit (S), able to supply heat to said heat-carrying fluid circulating in said conditioning circuit (C).

9. Device as in claims 7 and 8, **wherein** said regeneration unit (29) is also configured for the regeneration of said second chemical mixture.

10. Device as in any of the claims from 5 to 9, **wherein** said heating means (19) comprise electric heating resistances (21) integrated through in said thermal accumulation member (16) and fed by a feed and control unit (24) configured to supply electric energy in a controlled manner to said electric heating resistances (21).

11. Device as in any of the claims from 1 to 10, **wherein** the heat exchange means (18) comprise a solid-state heat pump (32) associated, directly or indirectly, with said at least one heat accumulation member (16).

12. Device as in claim 11, **wherein** a solid-state heat pump (32) is provided, interposed between two heat accumulation members (16), each associated with a respective ventilation unit (13).

13. Device as in claims 2 and 12, **wherein** two conditioning circuits (C) are provided, each associated with a respective heat accumulation member (16) and provided with heat exchange coils (18a) cooperating respectively with a hot face or side of the solid-state heat pump (32) and with a cold face or side of the solid-state heat pump (32).

14. Device as in claims 2 and 11, **wherein** a solid-state heat pump (32) is provided, associated with a single thermal accumulation member (16), and two conditioning circuits (C) are provided, associated with the same thermal accumulation member (16) and also associated, respectively with one hot face or side of the solid-state heat pump (32) and with one cold face or side of the solid-state heat pump (32).

15. Device as in claims 2 and 11, **wherein** a solid-state heat pump (32) is provided, associated with two thermal accumulation members (16), and wherein two conditioning circuits (C) are provided, each associated with a respective thermal accumulation member (16) and associated respectively with one hot face or side of the solid-state heat pump (32) and with one cold face or side of the solid-state heat pump (32).

16. Device as in claims 2, 3 and 11, **wherein** a solid-state heat pump (32) is provided, associated with a single thermal accumulation member (16) and wherein one conditioning circuit (C) associated with the thermal accumulation member (16) and two heat exchange circuits (S) are provided, associated respectively with one hot face or side of the solid-state heat pump (32) and with one cold face or side of the solid-state heat pump (32).

17. Device as in claim 16, **wherein** the conditioning circuit (C) is provided with a heat exchange coil (18a) and said two heat exchange circuits (S) are provided with respective heat exchange coils (20a) coupled with said heat exchange coil (18a).

18. Device as in any claim from 1 to 17, **wherein** the thermal accumulation member (16) comprises a containing structure filled with a plurality of filling elements disposed randomly, to define a packed structure with a plurality of channels, or passages which define said internal cavities (17)

19. Apparatus in a kit for conditioning and ventilating one or more closed rooms (11), comprising a plurality of devices as in any claim hereinbefore.
